# EUROPÄISCHE PATENTSCHRIFT

(11) **EP 1 581 749 B1**
(45) Veröffentlichungstag und Bekanntmachung des Hinweises auf die Patenterteilung: **08.06.2011**
(21) Anmeldenummer: 03776755.5
(22) Anmeldetag: 23.12.2003
(51) Int. Cl.: F16B 21/18

(54) **Tür- oder Fensterbeschlag mit Rastelement**
Door or Window fitting with detent element
Ferrure de fenêtre ou porte avec élément d'arrêt

(30) Priorität: 10.01.2003 CH 362003
(43) Veröffentlichungstag der Anmeldung: 05.10.2005
(73) Patentinhaber: Glutz AG, 4500 Solothurn (CH)
(72) Erfinder: KOHL, Albert, CH-3012 Bern (CH); UNGEWISS, Steffen, CH-4587 Aetingen (CH)
(74) Vertreter: Frei Patent Attorneys
(86) Internationale Anmeldenummer: PCT/CH2003/000843
(87) Internationale Veröffentlichungsnummer: WO 2004/063576

(56) Entgegenhaltungen:
- EP-A- 1 022 413
- CH-A- 446 948
- DE-A- 2 641 628
- DE-B- 1 110 958
- DE-U- 9 414 208
- DE-U- 29 801 858
- FR-A- 2 330 830
- FR-A- 2 600 128
- GB-A- 2 130 669
- US-A- 2 026 454
- US-A- 5 352 079

## Beschreibung

Die Erfindung liegt auf dem Gebiet von Tür- oder Fensterbeschlägen. Sie betrifft insbesondere Beschläge, bei welchen ein Betätigungselement (Türdrücker, Griff, Knopf etc.) oder ein Betätigungselementenpaar mittels Grundplatten und/oder Rastelementen auf Türen oder Fenstern befestigt werden.

Es existieren die verschiedensten Ausführungsarten dieser Beschläge. Sie weisen im Allgemeinen die folgenden Elemente auf:
- Schilder oder Grundplatten mit Rosetten zur Befestigung des Beschlags auf Türen und Fenstern;
- Betätigungselemente wie Drücker, Knöpfe, Griffe und Oliven zur Betätigung des eigentlichen Schliesselementes von Türen und Fenstern, und
- Elemente zur Verbindung und Lagerung der beiden Komponenten.

Schilder und Rosetten für Türen- und Fensterbeschläge werden vorwiegend in folgenden Hauptausführungen hergestellt. Für jede dieser Ausführungen sind teilweise unterschiedliche Kriterien wichtig:
a) Flachschilder oder -Rosetten, welche aus Flachmaterial (Blech, Guss) und eingesetzten Führungsbuchsen hergestellt sind. Sie sind vorwiegend ein- oder beidseitig sichtbar verschraubt.
b) Unsichtbar verschraubte Schilder oder Rosetten. Sie bestehen vorwiegend aus Grundplatten, welche miteinander verschraubt sind und Abdeckhauben, welche darauf aufgeschnappt oder aufgeklemmt werden und so die Verschraubung abdecken.
c) Metallbauschilder, oder -Rosetten welche im allgemeinen relativ schmal sind, dafür oftmals in stabilen Ausführungen zum Einsatz kommen. Sie werden vorwiegend für Türen und Fenster aus Metall- oder Kunststoff-Hohlprofilen eingesetzt und sollen vorzugsweise nachstehende Anforderungen erfüllen. Da Türen und Fenster aus Metall und Kunststoff aus vorwiegend dünnwandigen und schmalen Profilen aufgebaut sind, sollen die entsprechenden Beschläge so ausgeführt werden, dass auf der Rückseite möglichst keine Drückerführungen oder sonstige Bauelemente vorstehen. Daraus resultiert, dass in Tür- oder Fensterrahmen nur eine Durchgangsbohrung für die Grösse des Vierkantdomes zur Betätigung des Schliesselementes nötig ist, was sich vorteilhaft auf die Festigkeit des Tür- oder Fensterelementes auswirkt.
d) Sicherheitsschilder, oder -Rosetten für Haus- und Wohnungsabschlusstüren, welche vorwiegend aus einem stabilen Aussenschild und einem oftmals unsichtbar verschraubten Innenschild bestehen. Sie sollen möglichst den Anforderungen nach DIN 18257 und EN 1906 entsprechen. Hier ist eine möglichst einfache und stabile festdrehbare Lagerung der Betätigungselemente vorteilhaft.
e) Schilder, oder Rosetten, mit teilweise integrierten Antriebsgetrieben, für Fenster

Betätigungselemente wie Drücker, Griffe, Knöpfe, Oliven werden nebst den unterschiedlichen Formen und Materialien in folgenden Ausführungen hergestellt:
a) Betätigungselement mit zylindrischem Führungsansatz. Bei einfachen Anwendungen werden Drücker, Griffe, usw. nur über den zur Betätigung eines Türschlosses nötigen Vierkantdorn miteinander verbunden. Die Verbindung besteht oftmals aus der Verstiftung des einen Betätigungselements mit dem Vierkantdorn und der Verschraubung des zweiten Betätigungselements mittels eines Gewindestiftes quer zur Achsrichtung. Durch den vorzugsweise kurzen Führungsansatz können sie oftmals auch im Metall- und Kunststoffbau und für Fensterbeschläge eingesetzt werden.
b) Betätigungselement für die festdrehbare Verbindungsart. Der Führungshals des Betätigungselements ist zusätzlich mit einer Nut versehen, um das Betätigungselement mittels Sicherungsringen, Sprengringen und dergleichen mit dem Schild mechanisch zu verbinden. Sie können auch mit einer konischen Partie versehen sein um die Verbindung mit dem Schild ohne Werkzeuge, d.h. schnapp- oder rastbar herzustellen. Durch die, konstruktionsbedingt lange Bauform des Führungshalses können diese Betätigungselemente normalerweise nicht im Metall- und Kunststoffbau und für Fensterbeschläge eingesetzt werden.

Verbindungs- und Lagerart:
a) Einfache Verbindungsart: Die Drücker, Griffe und dergleichen werden in den Schildern nur radial gelagert
b) Festdrehbare Verbindungsart: Für höhere Ansprüche, bei vielbegangenen oder schweren Türen, oder Türen mit federbetätigten Türschliessem genügt die einfache Verbindungsart nicht. Durch die auftretenden Axialkräfte würden sich die Türdrücker vom Vierkantdorn und somit auch von den Türschildern lösen. Für diese Anwendungen werden die Drücker, Griffe, usw. zusätzlich in den Türschildern, Rosetten axial und drehbar, möglichst spielfrei, gehalten. Diese Montage kann im Herstellerwerk oder bei Ausführungen mit Rasteinrichtungen erst beim Händler oder direkt auf der Baustelle ausgeführt werden. Da diese Rastverbindungen der Betätigungselemente mit den Schildern erst im Handel oder bauseitig ausgeführt werden, reduzieren sich die Variantenvielfalt, Lagerhaltungs- und Transportkosten erheblich. Auch wird die Montage bei einigen Ausführungsarten der Beschläge erheblich vereinfacht, da beim Festschrauben keine Abdeckschilder oder Betätigungselemente im Weg sind, da sie erst nachträglich aufgeschnappt werden.
c) Die Lagerungsarten wie Gleit- oder Nadellager, usw. soll bei beiden Verbindungsarten den jeweiligen Anforderungen entsprechen.

DE-298 01 858 U1 beschreibt ein Rastsystem mit Rastelementen, welche radial in die Nut des Drückerhalses eingreifen. Da diese Rastelemente nur partiell wirken, kann der Drücker keine hohen Axialkräfte aufnehmen und die Festigkeit der Verbindung ist für viele Anwendungsbereiche zu gering. Durch die konstruktionsbedingte Bauform kann dieses System nur bedingt für Flachschilder eingesetzt werden.

In EP 0 628 680 B1 wird eine Drückeranordnung beschrieben, bei der der Drücker mittels einer Schenkelfeder an einem Überdeckschild oder einer Überdeckrosette befestigt wird. Durch den Einsatz einer Schenkelfeder kann ein gewisser Spielausgleich erreicht werden, aber die Konstruktionsgemäss aus Runddraht gefertigte Schenkelfeder kann keine grossen Axialkräfte übernehmen. Auch ist diese Bauform aufgrund der sichtbaren Federkonstruktion für Flachschilder nicht geeignet.

EP 1 022 413 A1 beschreibt eine Befestigungsplatte zur axialfest-drehbaren Aufnahme von Handgriffen. Die Verbindung beinhaltet einen handelsüblichen Sprengring, der in einer Nut einer Buchse gehalten ist. Diese Buchse ist mit einer zusätzlichen Hülse auf der Aussenseite der Befestigungsplatte vernietet. Dieser mehrteilige Aufbau der Befestigungsplatte ist kostenintensiv und wenig stabil. Der Einsatz eines handelsüblichen Sprengringes bedingt zudem einen langen Spreizkonus am Drückerhals, da sonst die Reibungskräfte beim Einsetzen des Sprengringes in die Nut zu gross wären. Das bedeutet, dass diese Drückerbauform mit der langen Führungs- und Rastpartie bei Beschlägen für dünne Holztüren, im Metall- und Kunststoffbau und für Fenster nicht, oder nur beschränkt einsetzbar ist. Durch den Einsatz einer Bundbuchse als Lager können nicht, oder nur bedingt, andere Lagerarten, wie Nadellager eingesetzt werden. Nachträgliche Montage des Festdrehbar- oder Rastsystems ist nicht möglich. Dadurch sind Kombinationen mit Schildern und Drückern von Fremdherstellern nicht realisierbar. Durch die Verprägung auf der Aussenseite ist der Einsatz dieses Systems bei Flachschildern nur bedingt möglich.

Aus dem Stand der Technik ist bekannt, dass Sicherungsringe am einfachsten über konische Wellenenden eines Betätigungselements, oder wenn nicht vorhanden, durch Aufsetzen eines konischen Montagezapfens (Beschrieben beispielsweise in den Katalogen der Sicherungsring-Hersteller) ohne Gefahr der Überbelastung montiert werden können. Diese Montageart von genormten Sicherungs- oder Sprengringen bedingt aber eine relativ lange konische Partie am Wellenende, welche wiederum bei vielen der beschriebenen Beschlagsarten aus Platzgründen, aber auch aus ästhetischen Gründen, nur bedingt einsetzbar ist. Ausserdem ist die Montage umständlich, beispielsweise muss das Beschlaggsystem zuerst zusammengesetzt werden und kann erst dann am Fenster/der Türe befestigt werden. Beim Auswechseln von einzelnen Elementen - bspw. des Betätigungselementes - bedingt das, dass das ganze Beschlagssystem ausgebaut werden muss, was unter Umständen nicht oder nur erschwert möglich ist.

Aufgabe der Erfindung ist es, einen Tür-oder Fensterbeschlag zu schaffen, mit welchen Nachteile bekannter Beschläge behoben werden können. Er sollte ein Beschlagssystem ermöglichen, welches möglichst universell einsetzbar ist.

Die Aufgabe wird durch den Tür- oder Fensterbeschlag gemäß Anspruch 1 gelöst.

Ein Rastelement eines erfindungsngesmässen Beschlags ist so ausgestaltet, dass es für Betätigungselemente verwendbar ist, bei welchen die konische Partie am Ende eines Betätigungselement-Halses sehr kurz ist. Es ist so ausgebildet, dass die Reibkräfte beim Montieren des Rastelements reduziert sind. Das Rastelement ist als an einer Stelle geöffnete ringförmige Scheibe ausgebildet, welches abweichend von einem Verlauf mit konstantem Innenradius mindestens eine Einbuchtung aufweist. Vorzugsweise ist eine Einbuchtung an einem Ort mit hohem Spannungsquerschnitt, bspw. in der Nähe einer Symmetrieachse vorhanden bzw. auf der der Ringöffnung gegenüberliegenden Seite der Scheibe und ist als bspw. bogenförmige Einbuchtung in die Scheibe gestaltet.

Das Rastelement ermöglicht, dass festdrehbar montierte Betätigungselemente auch im Metall- und Kunststoffbau und für Fensterbeschläge eingesetzt werden können, bspw. in Kombination mit der erfindungsgemässen Grundplatte.

Durch das Anbringen von mindestens einer Einbuchtung bzw. einem Bereich mit verringerter Scheibenbreite, insbesondere im Bereich der Scheibe mit höchstem Spannungsquerschnitt, wird die Federspannung des Rastelements massiv erniedrigt. Das Rastelement kann über einen wesentlich steileren Konus gespreizt werden, als dies mit herkömmlichen Sprengringen möglich ist. Dies bedeutet, dass Beschläge mit wesentlich kürzeren, oder sogar ganz ohne Überstände des Betätigungselements oder Schildes realisiert werden können.

Vorzugsweise sind noch weitere Stellen mit reduzierter Scheibenbreite vorhanden, die so angeordnet sind, dass die innere Fläche des Rastelementes eine endliche Anzahl (bspw. 3 bis 10) von Auflagepunkten zum Aufliegen auf einer konischen Partie des Betätigungselementes aufweist, wenn das Rastelement auf die konische Partie aufgeschoben und dabei aufgespreizt wird. Es können bspw. zwei weitere Bereiche mit verringerter Scheibenbreite als Freistellungen der Ringenden gestaltet sein.

Diese Konstruktion führt zu einer Verkleinerung der Fügekräfte beim Aufschieben des Rastelementes auf das Ende eines Betätigungselementes und ermöglicht daher unmittelbar die Verkürzung von deren konischer Partie.

Der Aussenradius bleibt bspw. aufgrund der Sicherungsfunktion des Rastelements möglichst über den gesamten Umfang konstant.

Das erfindunsgemässe Beschlagssystem besitzt nebst dem Rastelement ein (nicht notwendigerweise einstückiges) Betätigungselement, das einen als Führungspartie dienenden Endkonus aufweist, auf welchen das Rastelement aufschiebbar ist, und daran anschliessend einen Einschnitt, in welchen das Rastelement einrastet. Vorzugsweise ist auch noch ein Führungselement vorhanden, beispielsweise eine Haube, durch welches das Rastelement beim Aufschieben auf den Endkonus geführt werden kann, und welches ein einfaches Aufclicken ermöglicht. Das Führungselement kann nach dem Aufschieben des Rastelementes im Beschlagssystem verbleiben und bspw. beim eventuellen Entfernen des Türdrückers das Rastelement ebenfalls führen.

Durch Einsatz des Rastelement kann so eine stabile festdrehbare Verbindung des Betätigungselements mit Schildern bzw. Grundplatten hergestellt werden.

Durch das Rastelement wird wie beschrieben ermöglicht, dass die konische Partie am Ende des Betätigungselement-Halses verkürzt ist. Es ist daher eine stabile Montage von Betätigungselement und Lager mittels einer Grundplatte möglich, beispielsweise ohne dass die konische Partie rückseitig über die durch Tür bzw. Fenster(-rahmen) definierte Ebene hinausragt, und ohne dass durch eine übermässig dicke Abdeckung der ästhetische Eindruck empfindlich gestört wurde. Es ermöglicht aber auch gemäss der eingangs gestellten Aufgabe, dass dieselben, standardisierten Elemente für eine festdrehbare Verbindungsart genauso für Flachschilder, wie für unsichtbar verschraubte Schilder, Metallbauschilder und Sicherheitsschilder verwendbar sind. Ein Beschlag, der gemäss der vorliegenden Erfindung gestaltet ist, bietet daher Vorteile im Bezug auf die Herstellkosten, Lagerhaltung, Transportkosten, Variantenvielfalt, und Universalität des gesamten beschriebenen Beschlagsystems.

Bei dünnwandigen Holztüren kann beispielsweise ein von der Türindustrie geforderter maximaler Überstand einer Drückerführungspartie und Lagerhülse des Beschlages in die Türoberfläche von 4 - 5 mm bei einem Durchmesser von maximal 25 mm, problemlos eingehalten werden. Für Metallbau- und Kunststoff-Türen und - Fenster können Beschläge wie erwähnt komplett ohne hinteren Überstand des Betätigungselements und Schildes realisiert werden. Für Flachschilder sind keine unschönen Federelemente, kein Kunststoffbund der Lagerung oder sonstige Mechanismen auf der Vorderseite sichtbar. Auch kann der komplette Beschlag, inklusive der Rastelemente in nichtrostenden Materialien wie Chromstahl gefertigt werden.

Das Rastsystem für die Festdrehbar-Montage bietet zudem die Möglichkeit einen Beschlag nachträglich mit einfachen Hilfsmitteln bei Bedarf nachzurüsten. Auch bei Beschlägen ohne Festdrehbar-Montage kann nachträglich durch Aufbringen eines handelsüblichen Sicherungsringes eine stabile Festdrehbar-Verbindung hergestellt werden. Eine Festdrehbar-Verbindung kann mittels einer handelsüblichen Sicherungsring-Zange gelöst werden.

Die Anforderungen für Feuerschutz kann in allen Ausführungsarten berücksichtigt werden. Erfindungsgemässe Schilder oder Grundplatten können zudem aus geeigneten, aber im wesentlichen beliebigen Materialien hergestellt werden bzw. solche beinhalten, wie beispielsweise CrNi-Guss, Zamak, Aluguss, Stahl oder Kunststoff.

Der Tür- oder Fensterbeschlag weist bevorzugt eine Grundplatte auf, welche sich im Wesentlichen dadurch aus zeichnet, dass sie eine, eine Achse definierende erste Fläche, welche als Führungsfläche zum Aufnehmen von Lagern verschiedener Ausführungsformen für einen Hals des Betätigungselements ausgebildet ist, und welche von einem unteren, der Tür- oder Fensteroberfläche zugewandten Ende zu einem oberen Ende verläuft. Die Grundplatte besitzt eine zweite Fläche, welche sich, auf die Achse bezogen, von Aussen - vorzugsweise stetig - gegen das obere Ende der ersten Fläche hin verjüngt.

Die Bedeutung des Begriffs "verjüngt" ist hier nicht auf eine konisch zulaufende Form beschränkt, sondern bezieht sich auf jegliche Flächenform, bei welcher eine laterale Abmessung in Funktion der axialen Position abnimmt.

Durch die führende erste Fläche wird eine Standardisierung möglich: es kann nach der Fertigung entschieden werden, was für ein Lager in die Grundplatte eingesetzt wird, und es kann ein beliebiges passendes Betätigungselement gewählt werden.

Die die erste Fläche bildende Konstruktion wird in diesem Text auch "Führungspartie" genannt (nicht zu verwechseln mit der Führungspartie des Betätigungselementes für das Rastelement). Die Führungspartie ist fest - also nicht reversibel lösbar - mit den übrigen Elementen der Grundplatte verbunden, indem die Grundplatte einstückig ist. Ein beliebiges Lager und ein Betätigungselement können hingegen lösbar - und also auswechselbar - an der Grundplatte befestigt sein. Es ist auch möglich, bspw. ein Gleitlager gegen ein Nadellager (als Beispiel eines Wälzkörperlagers) auszutauschen.

Durch die im wesentlichen immer gleiche Gestaltung der Führungs- bzw. Lagerpartie, ist es möglich, erst in der letzten Produktionsstufe, oder sogar erst bei Zweigstellen, Handel oder Auslandvertretung, zu entscheiden, welche den Anforderungen entsprechenden Lagerarten, wie Gleitlager aus Kunststoff, Metall, Keramik oder Nadellager eingesetzt werden sollen.

Die Grundplatte ist rationell als geformtes Blech herstellbar.

Die Konstruktion mit der ersten und der nach aussen gezogenen zweiten Fläche ermöglicht bspw. einen Beschlag, bei welchem - mit Ausnahme des Vierkantdorns zur Betätigung des Schliesselementes - keine Elemente rückseitig vorstehen, dass also keine Elemente über die durch die Tür- bzw. Fensteroberfläche (bzw. Rahmenoberfläche) gebildete Ebene ragen.

Die Grundplatte (sie kann auch als Türschild dienen) ist einstückig ausgeführt. Sie ist bspw. als eine Platte ausgebildet, die so geformt ist, dass sie die erste und die zweite Fläche als Oberflächen aufweist. Die erste Fläche dient zum Aufnehmen unterschiedlicher Lagerarten, die wiederum zum Lagern der Betätigungselemente, wie, Drücker, Griffe, Knöpfe etc. dienen. Zwischen der ersten und der zweiten Fläche kann ein bspw. zur von Tür oder Fenster definierten Auflageebene im Wesentlichen paralleles Zwischenstück vorhanden sein. Der beschriebene Verlauf der Oberfläche mit (innerer) erster Fläche und sich verjüngender zweiter Fläche sorgt dafür, dass die Grundkonstruktion sehr stabil ist - die Grundplatte ist in dieser Ausführungsform auch als Blech sehr formsteif, weist aber doch die nötige Flexibilität für eine gewisse Federwirkung auf. so ausgstallete Grundplatten können höhere Kräfte aufnehmen als bekannte Grundplatten mit eingesetzten Führungshülsen.

An das untere Ende der ersten Fläche kann eine als Anschlag für ein Rastelement dienende Anschlagfläche vorhanden sein. Sie ist beispielsweise als ein nach innen vorstehender ringförmig verlaufender Vorsprung bzw. eine Ausbördelung ausgebildet.

Im folgenden werden Ausführungsbeispiele der Erfindung anhand von Figuren schematisch dargestellt. Dabei zeigt
- Fig. 1:: Eine Schnittansicht eines Beschlags mit Grundplatte (Schild),
- Fig. 2:: eine Isometrieansicht des Beschlages aus Fig. 1,
- Fig. 3:: eine Detailansicht der Rastverbindung,
- Fig. 4:: eine Detailansicht der Abdeckhaube,
- Fig. 5:: eine Rastscheibe,
- Fig: 6:: eine weitere Ausführungsform der Grundplatte als Rosette
- Fig. 7:: eine dritte Ausführungsform der Grundplatte als Flachschild
- Fig. 8:: eine vierte Ausführungsform der Grundplatte als unsichtbar verschraubtes Schild
- Fig. 9:: Ausführungsform der Grundplatte als Flachschild mit eingebördelter Rosette.
- Fig. 10:: Weitere Ausführungsform der Grundplatte als Flachschild mit eingenieteter Rosette.
- Fig. 11:: Eine Prinzipienskizze zum Funktionsprinzip des Rastsystems.

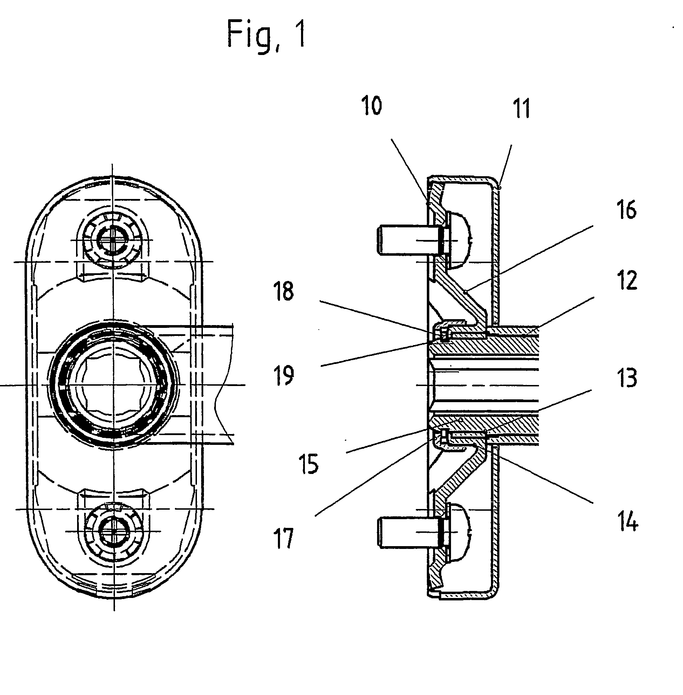

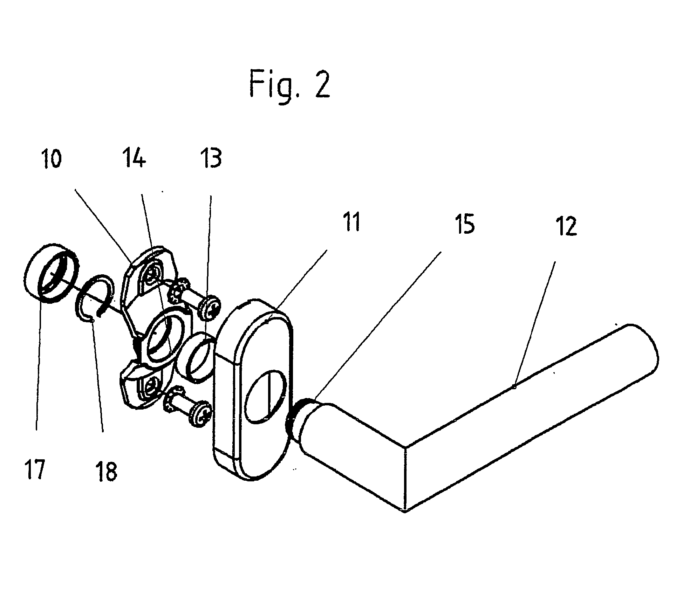

Die Figuren 1 und 2 zeigen die Grundplatte 10 - als Olive ausgebildet - eines Beschlags. Die Grundplatte ist vorzugsweise einstückig und bspw. ein im Stanz-Ziehverfahren hergestelltes Blechteil. Sie weist eine Führungspartie mit einer ersten, als Führungsfläche dienenden Fläche 14 und einer zweiten Fläche 16 auf, mit einer zum Aufnehmen von unterschiedlichen Lagerarten versehenen abgesetzten Führungspartie. Durch die konisch nach oben (zweite Fläche 16) und dann wieder nach unten (erste Fläche 14) gezogene Führungspartie entsteht eine extrem stabile Grundkonstruktion. Der untere Bund dieser einteiligen Konstruktion bildet den Anschlag für handelsübliche Sicherungsringe oder auch für ein speziell entwickeltes Rastelement, hier Rastscheibe 18 genannt. Der Anschlag kann aber auch bei der Aufnahme eines Lagers eine Positionierfunktion einnehmen. Sowohl ein handelsüblicher Sicherungsring als auch ein speziell entwickeltes Rastelement (siehe unten) bilden mit dem Einstich des Drückerhalses eine sehr stabile festdrehbare Verbindung.

Wie im in Figur 1 gezeichneten Schnitt sichtbar, besitzt das Beschlagssystem dank der stabilen Grundplatte und dank dem kurzen Konus am Ende des Drückerhalses keinen hinteren Überstand.

In der Figur 2 ist zudem ein im wesentlich vollständiger Satz eines Beschlags gezeigt, inklusive - als Beispiel für ein Betätigungselement - ein Drücker 12 mit konischer Drückerführung 15, dem Lager 13 für die in der Grundplatte 10 integrierte Führungspartie 14, 16, die Rastscheibe 18 in der Form eines Sprengrings, sowie die zugehörige Haube 17. Die erste Fläche (14) verläuft um die von ihr gebildete Achse herum zumindest abschnittweise zylindrisch.

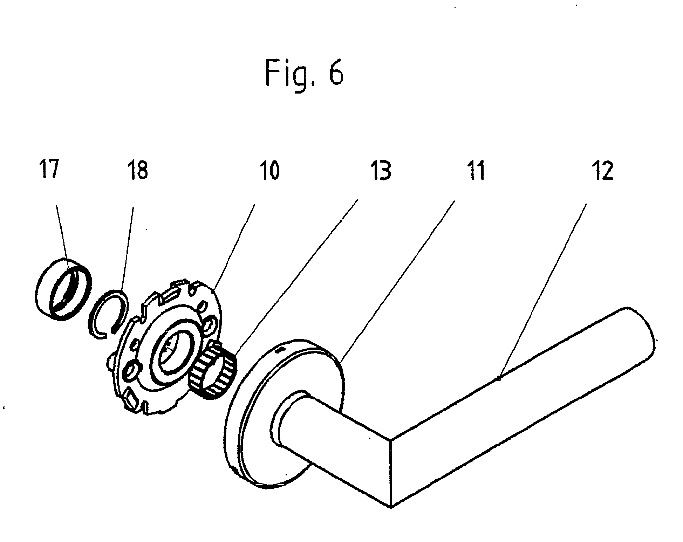

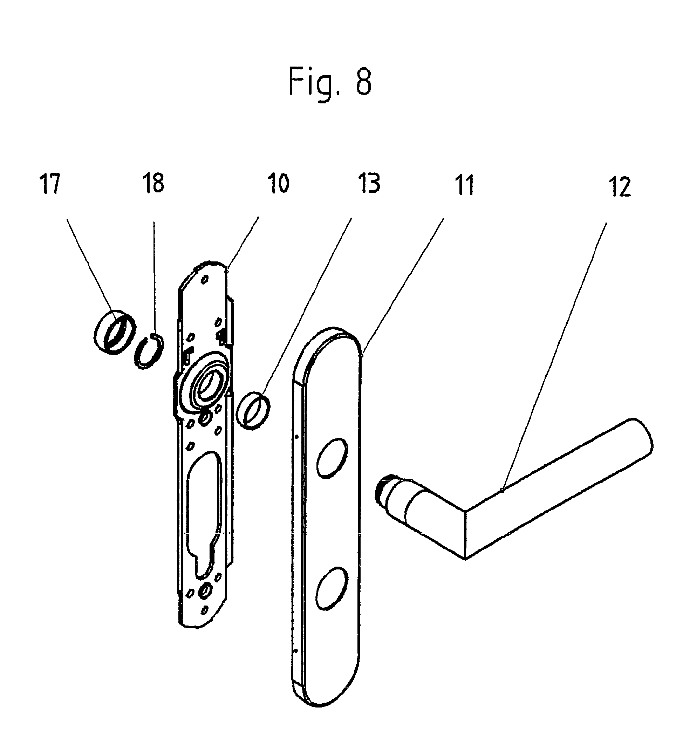

Die **Figuren 6** **und** **8** zeigen weitere bevorzugte Ausführungsformen der Grundplatte bzw. des Schildes, ausgestaltet als Rosette und unsichtbar verschraubtes Schild. Für dieselben Elemente wurden die Bezugszeichen von den bisherigen Figuren übernommen. In Figur 6 sind die Grundplatte 10, in deren Zentrum die konisch verlaufenden Führungspartie ausgebildet ist, und die Abdeckhaube 11 als Rosette geformt. Figur 8 zeigt eine, mittels einer Abdeckhaube 11 unsichtbar verschraubbare, Grundplatte 10. Abdeckhaube und Grundplatte weisen unter anderem eine Führungspartie bzw. Öffnungen für einen Drücker 12 und eine Schlossvorrichtung auf.

Besonders vorteilhaft ist wie erwähnt eine Kombination einer solchen Grundplatte mit einem Rastsystem, welches eine konische Endpartie des Betätigungselement-Halses und daran anschliessend ein Einschnitt (Einstich) für ein Rastelement sowie das Rastelement beinhaltet. Durch das Rastelement wird wie beschrieben ermöglicht, dass die konische Partie am Ende des Betätigungselement-Halses verkürzt ist. In Kombination mit einer wie vorsfehend beschrieben ausgeführten Grundplatte ist daher eine stabile Montage von Betätigungselement und Lager mittels der Grundplatte möglich, beispielsweise ohne dass die konische Partie rückseitig über die durch Tür bzw. Fenster(-rahmen) definierte Ebene hinausragt, und ohne dass durch eine übermässig dicke Abdeckung der ästhetische Eindruck empfindlich gestört wurde.

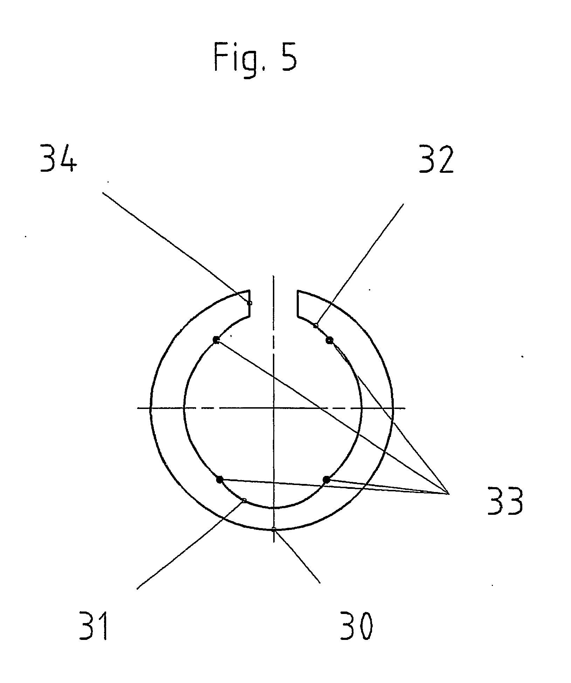

**Figur 5** zeigt ein Rastelement, nämlich eine Rastscheibe 18, welche es ermöglicht die konische Partie 19 am Wellenende eines Drückers extrem kurz zu gestalten. Die Rastscheibe 18 besteht aus einer an einer Stelle 34 geöffneten Scheibe, welche am Ort mit dem höchsten Spannungsquerschnitt 30 mit einer bogenförmigen Einbuchtung 31 versehen ist. Dadurch wird die Federspannung der Rastscheibe drastisch reduziert und kann nun durch einen viel kürzeren und steileren Konus gespreizt werden. Im weiteren sind im oberen Bereich der Rastscheibe zwei Freistellungen 32 vorgesehen, welche mit der unteren Einbuchtung 31 zu einer nur punktuellen Berührung 33 der konischen Partie des Drückers 19 führen. Daraus resultiert auch wieder eine Verkleinerung der Fügekräfte, und somit die Möglichkeit einer weiteren Verkürzung der konischen Partie des Drückers.

Die Geometrie der Rastscheibe 18 ist vorzugsweise so, dass bei rostfreiem Federmaterial optimale Kraftverhältnisse herrschen. Die Rastscheibe kann daher und auch für komplett rostfreie Beschläge eingesetzt werden. Die Dicke wird vorzugsweise so gewählt, dass die Rastscheibe gegebenenfalls, wie bei einfachen Ausführungen, auch durch einen handelsüblichen Sicherungsring ersetzt werden kann. Die Dicken- zu Breitenverhältnisse werden vorzugsweise ebenfalls so abgestimmt, dass bei möglichst kleinem Aussendurchmesser die Rastscheibe im kostengünstigen Stanzverfahren hergestellt werden kann. Die Rastscheibe kann auch als Ersatz des oftmals nicht rostgeschützten Sicherungsringes eingesetzt werden.

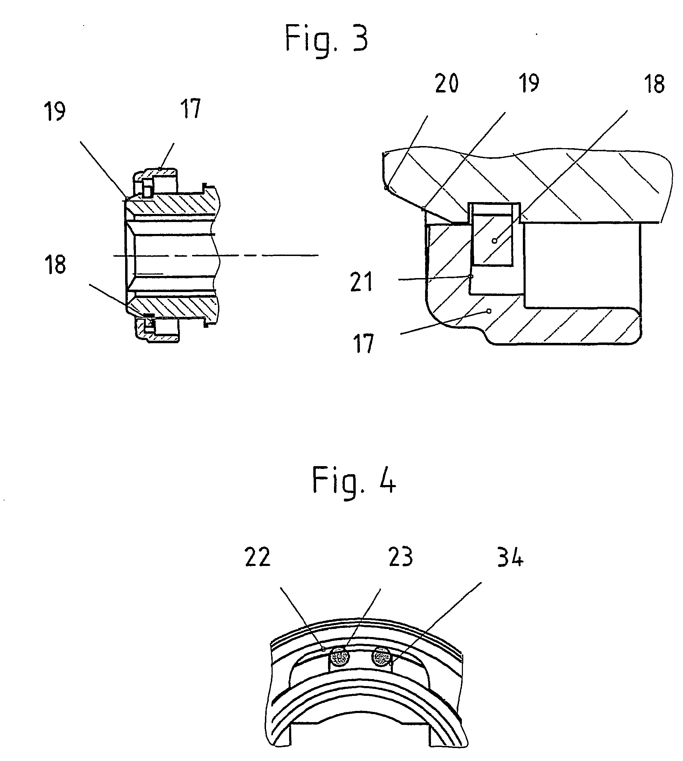

In **Figur 3** ist der Führungsansatz der Führungspartie 15 des Drückers mit einem Einstich für Sicherungsringe versehen. An der Endpartie befindet sich der extrem kurze Einführkonus 19, welcher zur Vorzentrierung der Rastscheibe noch mit einer Abrundung 20 versehen ist.

In Figur 3 ist die Rastscheibe mittels einer kappenförmigen, als Führungselement dienenden Haube 17 direkt auf den Führungshals 14 einer Grundplatte 10 durch einfaches Aufpressen montiert. Es entsteht so ein einfach aufgebautes Rastsystem. Die Haube ist im Innern mit einer leicht konisch nach innen ragenden Partie 21 versehen, damit sich die Rastscheibe beim Aufweiten durch den Drücker 12 in keinem Fall mit der radialen Aussenkante an der Haube eindrücken kann, was auch wiederum die kurze Bauform der konischen Führungspartie des Drückers 15 ermöglicht.

Die Haube 17 kann im Stanz-Ziehverfahren aus Blech, oder als Gussteil, bspw. als Kunststoff-Spritzgussteil, oder als Zinkdruckgussteil sehr kostengünstig hergestellt werden. Da die Haube typischerweise nur eine Funktion hat, bis der Drücker auf dem Schild montiert ist, hat deren Materialart keinen Einfluss auf den oft geforderten Feuerschutz des kompletten Beschlages.

In **Figur 4** ist die Haube mit einer Öffnung 22 dargestellt, welche so dimensioniert und ausgestaltet ist, dass deren äusserer Radius eine Führung für eine handelsübliche Sicherungsring-Zange 23 bildet, mit welcher das Rastsystem wieder gelöst werden kann. Das bewirkt auch, dass die Enden der Rastscheibe 34 keine besonderen schrägen oder konkaven Konturen benötigen, um mittels der beschriebenen Zange geöffnet zu werden. Das wirkt sich wiederum auf eine einfachere und stabilere Gestaltung des Stanzwerkzeuges der Rastscheibe aus. Beim Lösen des Rastsystems wirkt die Haube erneut führend, indem sie die aufgespreizte Rastscheibe - sie liegt mit ihrem Aussendurchmesser dann an der Innenfläche der Haube an - zentriert.

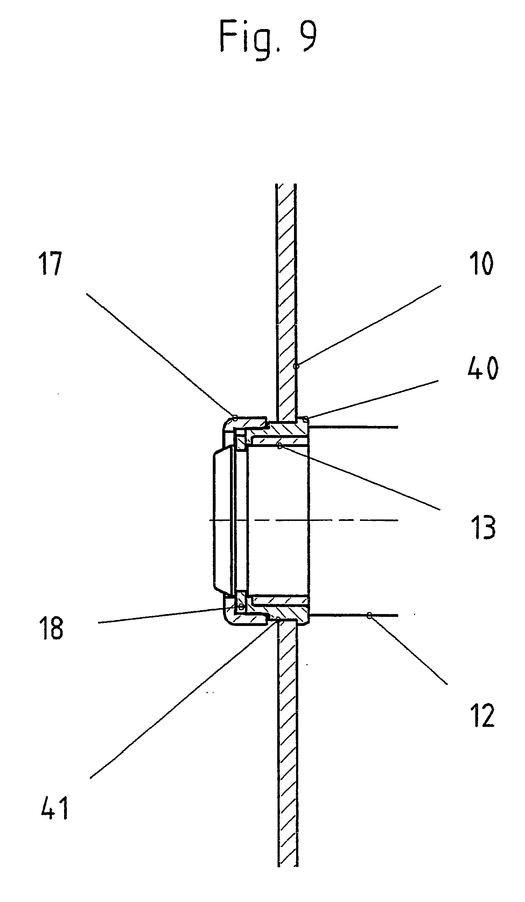

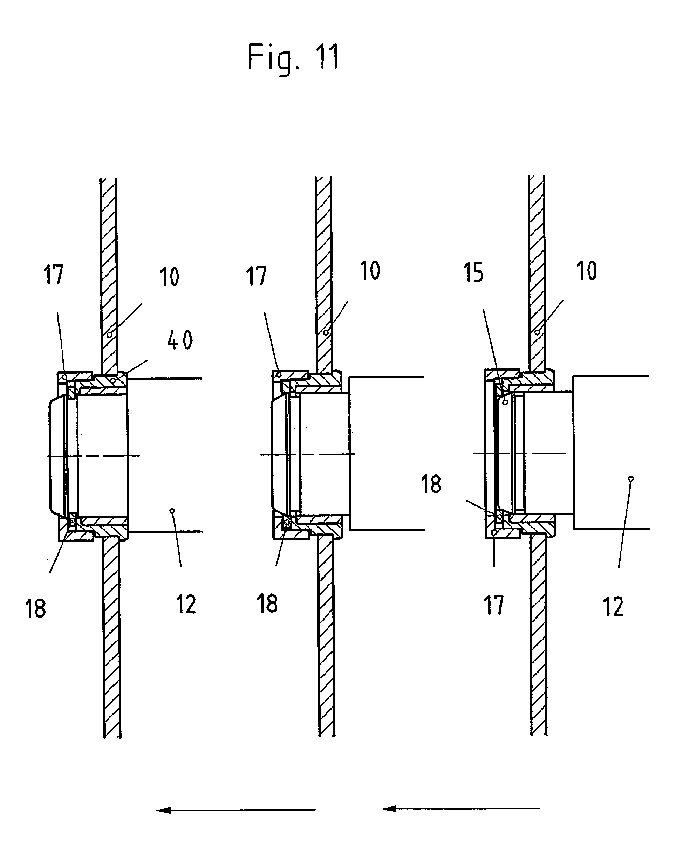

In **Figur 11** ist schematisch dargestellt, wie das erfindungsgemässe Rastsystem eine einfache Montage ermöglicht. Das zur Illustration dargestellte System entspricht demjenigen von Figur 9. Eine Haube 17 mit einem darin geführten Rastelement 18 ist an der Rosette 40 befestigt. Die konische Führungspartie 15 eines (u.U. in der Gestaltung frei wählbaren) Türdrückers 12 wird angesetzt (Bild rechts), und es wird Druck in axialer Richtung (in der Figur nach links) aufgesetzt, so dass die auf das Rastelement 18 aufgespreizt wird (mittleres Bild). Im eingerasteten Zustand (linkes Bild) ist das Rastelement eingerastet und steht an einem Anschlag der Rosette 40 bzw. der Grundplatte an.

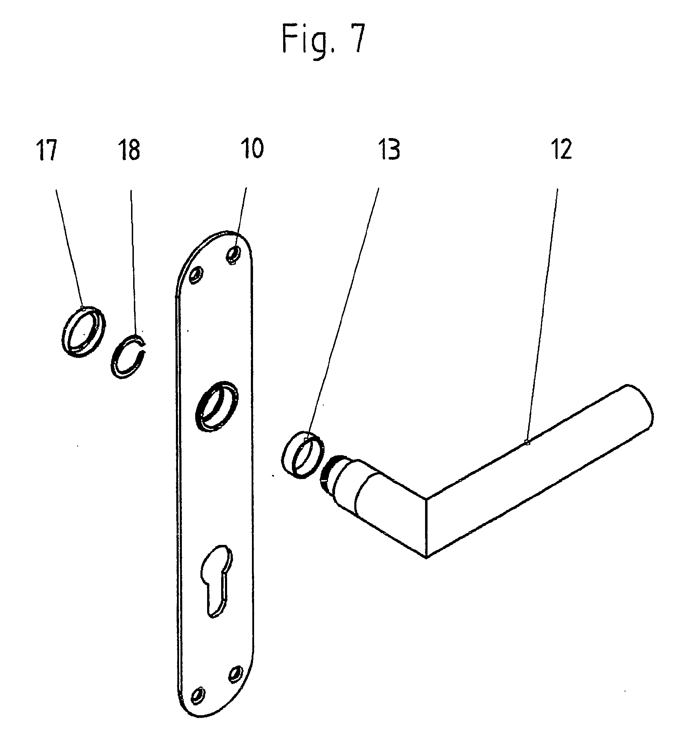

In Verbindung mit der vorstehand beschrichenen Rastscheibe kann die Führungspartie 15 des Drückers so kurz gestaltet werden, dass dieser bei im wesentlichen allen Schilderarten eingesetzt werden kann und somit die Drückervielfalt erheblich reduziert. In den Figuren 7 und 9 ist die Grundplatte 10 als Flachschild ohne Abdeckhaube gestaltet, und weist eine entsprechend kurze, nur wenig vorstehende Führungspartie auf. Figur 9 zeigt die als Flachschild ausgebildete Grundplatte 10 im Schnitt - ohne konische zweite (äussere) Fläche - mit Rosette 40, welche mittels einer Einbördelung 41 befestigt ist. Im Übrigen wurden wiederum dieselben Bezugszeichen für gleiche Elemente verwendet. Die als Flachschild ausgebildete, mit eingebördelter Rosette 40 versehene Grundplatte 10 ist ein Beispiel für eine nicht einstückige Grundplatte. Diese Ausführungsform zeigt, wie die Erfindung auch bei kostengünstigen Lösungen mit Flachschild eine festdrehbare Verbindungsart mit nur wenig hinterem Überstand ermöglicht, insbesondere dank dem Rastelement.

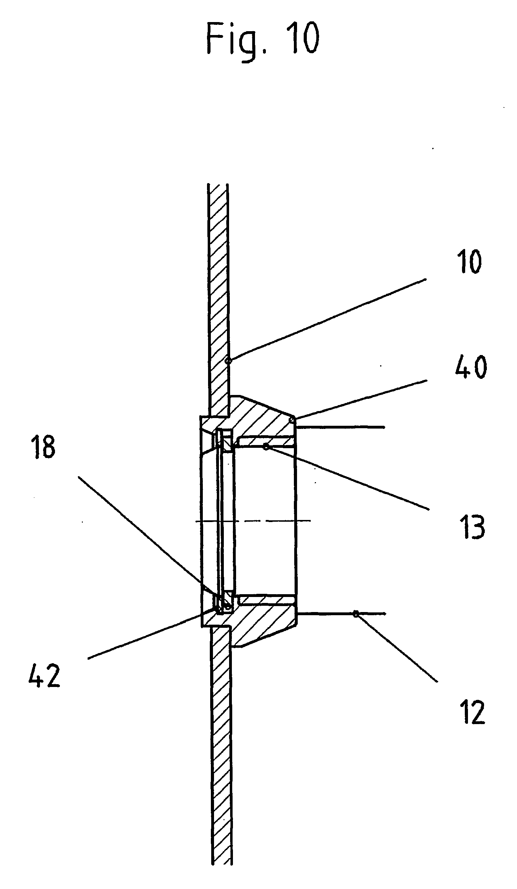

Bei der Ausführungsform gemäss Figur 10 wird eine Rosette 40 auf vorwiegend flachen Schildern eingenietet. Die Rastscheibe 18 wird in diesem Fall nicht durch eine aufgesetzte Haube 17 gehalten sondern durch eine zusätzliche, geöffnete Scheibe 42 direkt in der Rosette. Der Innendurchmesser der zusätzlichen Scheibe 42 ist bspw. grösser als der grösste Aussendurchmesser der konischen Drückerführung, aber kleiner als der Aussendurchmesser der Rastscheibe 18, so dass diese an der zusätzlichen Scheibe 42 anliegen kann. Die zusätzliche Scheibe wird ihrerseits durch eine Anschlagfläche der Rosette gehalten. Zum Entfernen des Betätigungselementes muss bspw. die Rastscheibe aufgespreizt werden, wie anhand von Fig. 4 dargestellt. Die Innenfläche der Rosette dient dabei zur Zentrierung. Die Rosette mit Rastscheibe und zusätzlicher Scheibe bildet so ein einfaches Führungselement, welches in flachen Schildern, und Platten eingesetzt werden kann.

## Patentansprüche

1. Tür- oder Fensterbeschlag mit mindestens einem Betätigungselement und einem Rastsystem mit welchem das Betätigungselement an einer Türe oder einem Fenster festdrehbar befestigbar ist, wobei dem Betägigungselement endseitig eine konische Führungspartie (15) und daran anschliessend ein Einstich zugeordnet ist, und wobei das Rastsystem ein Rastelement (18) aufweist, das so bemessen ist, dass es über die konische Führungspartie (15) schiebbar ist und dabei aufgespreizt wird und dass es in den Einstich einrastbar ist, **dadurch gekennzeichnet, dass** das Rastelement (18) als eine an einer Stelle geöffnete ringförmige Scheibe mit einer inneren Umfangslinie und einer äusseren Umfangslinie ausgebildet ist und eine Einbuchtung (31) aufweist, welche einen Bereich reduzierter Breite der Scheibe bewirkt.

2. Tür- oder Fensterbeschlag nach Anspruch 1, **dadurch gekennzeichnet, dass** sich der Bereich reduzierter Breite der Scheibe am der Ringöffnung gegenüberliegenden Ende der Scheibe befindet.

3. Tür- oder Fensterbeschlag nach Anspruch 1 oder 2, **dadurch gekennzeichnet, dass** die Einbuchtung (31) entlang der inneren Umfangslinie verläuft und dass weitere Bereiche reduzierter Breite vorhanden und so ausgestaltet und angeordnet sind, dass beim Aufschieben des Rastelementes auf einen sich konisch verjüngenden Körper endlich viele Auflagepunkte (33) vorhanden sind.

4. Tür- oder Fensterbeschlag nach Anspruch 3 bezogen auf Anspruch 2, **dadurch gekennzeichnet, dass** in an die Ringöffnung angrenzenden Randbereichen Freistellungen (32) vorhanden sind, die zusammen mit der Einbuchtung (31) bewirken, dass genau vier Auflagepunkte (33) vorhanden sind.

5. Tür- oder Fensterbeschlag nach einem der Ansprüche 1 bis 4, **dadurch gekennzeichnet, dass** die äussere Umfangslinie der Scheibe als im wesentlichen kreisförmige Kurve mit konstantem Radius verläuft.

6. Tür- oder Fensterbeschlag nach Anspruch einem der vorangehenden Ansprüche, **dadurch gekennzeichnet, dass** das Rastsystem ferner ein Führungselement zum Führen des Rastelementes beim Aufschieben auf die konische Führungspartie aufweist.

7. Tür- oder Fensterbeschlag nach Anspruch 6, **dadurch gekennzeichnet, dass** das Führungselement als Haube (17) ausgebildet ist.

8. Tür- oder Fensterbeschlag nach Anspruch 7, **dadurch gekennzeichnet, dass** die Haube einen nach Innen ragenden Flansch zur Führung des Rastelementes und eine den Flansch unterbrechende Öffnung (22) aufweist, durch welche eine Sicherungsring-Zange (23) führbar ist.

9. Tür- oder Fensterbeschlag nach Anspruch 6, **dadurch gekennzeichnet, dass** das Führungselement durch eine Innenfläche einer Rosette (40) und eine zusätzliche geöffnete Scheibe (42) gebildet wird.

10. Tür- oder Fensterbeschlag nach einem der vorangehenden Ansprüche, aufweisend eine Grundplatte (10) mit einer eine Achse definierenden erste Fläche (14), welche als Führungsfläche zum Aufnehmen von Lagern verschiedener Ausführungsformen, beispielsweise einem Gleitlager oder Wälzkörperlager, für einen Hals des Betätigungselementes ausgebildet ist und welche von einem unteren, der Tür- oder Fensteroberfläche zugewandten Ende zu einem oberen Ende verläuft, wobei die Grundplatte, das Betätigungselement und das Beschlagssystem so ausgebildet sind, dass mit Ausnahme von eventuell vorhanden Verschraubungen keine über die Tür- oder Fensteroberfläche hinausragenden Elemente aufweist.

11. Tür- oder Fensterbeschlag nach Anspruch 10, **dadurch gekennzeichnet, dass** das Rastelement an einer Anschlagfläche der Grundplatte (10) direkt oder indirekt anliegt.

12. Tür- oder Fensterbeschlag nach einem der vorangehenden Ansprüche **gekennzeichnet durch** eine Grundplatte zum Aufbringen auf eine Oberfläche der Türe oder des Fensters, aufweisend eine eine Achse definierende erste Fläche (14), welche als Führungsfläche zum Aufnehmen von Lagern verschiedener Ausführungsformen, beispielsweise eines Gleitlagers oder Wälzkörperlagers, für einen Hals des Betätigungselementes ausgebildet ist und welche von einem unteren, der Tür- oder Fensteroberfläche zugewandten Ende zu einem oberen Ende verläuft, und eine zweite Fläche (16), welche sich, auf die Achse bezogen, von Aussen gegen das obere Ende der ersten Fläche (14) hin verjüngt.

13. Tür- oder Fensterbeschlag nach Anspruch 12, **dadurch gekennzeichnet, dass** die zweite Fläche (16) bspw. im Wesentlichen konisch verläuft und/oder dass die erste Fläche (14) abschnittweise um die Achse herum zylindrisch verläuft.

14. Tür- oder Fensterbeschlag nach Anspruch 12 oder 13, **dadurch gekennzeichnet, dass** an die erste Fläche (14) an deren unteren Ende eine Anschlagfläche für ein Rastelement anschliesst.

15. Tür- oder Fensterbeschlag nach Anspruch 14, **dadurch gekennzeichnet, dass** die Anschlagfläche durch eine Ausbördelung am unteren Ende der ersten Fläche (14) gebildet wird.

16. Tür- oder Fensterbeschlag nach einem Ansprüche 12 bis 15, **dadurch gekennzeichnet, dass** sie so ausgebildet ist, dass das Lager so aufgenommen werden kann, dass es nicht über die Tür- oder Fensteroberfläche hinausragt.

## Claims

1. A door or window fitting with at least one operating element and a detent system by which means the operating element is attachable to a door or a window in a pivotably fixable manner, wherein, associated with the operating element, at an end of the operating element a conical guide part (15) and subsequent thereto a groove is provided, and wherein the detent system comprises a detent element (18), which is sized such that it is shiftable over the conical guide part (15) and thus be spread and that it is engageable in the groove, **characterized in that** the detent element (18) is designed as a ringshaped disc with an inner circumferential line and an outer circumferential line being open in one spot and comprising a recess (31) which produces an area of reduced width of the disc.

2. The door or window fitting according to claim 1, **characterized in that** the area of reduced width of the disc is located at the end of the disc opposite to the ring opening.

3. The door or window fitting according to claim 1 or 2, **characterized in that** the recess (31) runs along the inner circumferential line and that further areas of reduced width are present, and designed and arranged such that when the detent element is shifted onto a conically tapering body several contact points (33) are present.

4. The door or window fitting according to claim 3 with regard to claim 2, **characterized in that** divergences (32) are present at the boundary areas adjacent to the ring opening, which act together with the recess (31) to cause exactly four contact points (33) to be present.

5. The door or window fitting according to one of the claims 1 to 4, **characterized in that** the outer circumferential line of the disc runs in a substantially circular curve with a constant radius.

6. The door or window fitting according to one of the preceding claims, **characterized in that** the detent system further comprises a guide element for guiding the detent element when it is shifted onto the conical guide part.

7. The door or window fitting according to claim 6, **characterized in that** the guide element is designed as a cover (17).

8. The door or window fitting according to claim 7, **characterized in that** the cover comprises an inwardly projecting flange for guiding the detent element and an opening (22) which interrupts the flange, through which opening a retaining ring pincer (23) can be passed.

9. The door or window fitting according to claim 6, **characterized in that** the guide element is formed by an inner surface of a rosette (40) and an additional open disc (42).

10. The door or window fitting according to one of the preceding claims, comprising a base plate (10) with a first surface defining an axis (14), which is designed as a collar of the operating element, as a guide surface for containing bearings of different embodiments, for example a slide bearing or roller bearing, and which runs from a lower end facing the door or window surface to an upper end; wherein the base plate, the operating element and the detent system are designed such that they comprise no elements which project beyond the door or window surface, except for screw joints which may be present.

11. The door or window fitting according to claim 10, **characterized in that** the detent element directly or indirectly abuts against a contact surface of the base plate (10).

12. The door or window fitting according to one of the preceding claims **characterized by** a base plate for mounting on a door or window surface, comprising a first surface defining an axis (14) which is designed as a collar of the operating element, as a guide surface for containing bearings of different embodiments, for example a slide bearing or a roller bearing, and which runs from a lower end facing the door or window surface to an upper end; and a second surface (16), which in relation to the axis tapers from the exterior toward the upper end of the first surface (14).

13. The door or window fitting according to claim 12, **characterized in that** the second surface (16) for example runs substantially conically and/or that the first surface (14) in sections runs cylindrically about the axis.

14. The door or window fitting according to claim 12 or 13, **characterized in that** a contact surface for a detent element adjoins at the lower end of the first surface (14).

15. The door or window fitting according to claim 14, **characterized in that** the contact surface is formed by a projecting flange at the lower end of the first surface (14).

16. The door or window fitting according to one of the claims 12 to 15, **characterized in that** it is designed so that the bearing can be held without it projecting beyond the door or window surface.

## Revendications

1. Ferrure de porte ou de fenêtre qui présente au moins un élément d'actionnement et un système d'encliquetage par lequel l'élément d'actionnement peut être fixé par tourner sur une porte ou une fenêtre,
une partie de guidage conique (15) à laquelle se raccorde une gorge étant associée à une extrémité de l'élément d'actionnement,
le système d'encliquetage présentant un élément d'encliquetage (18) dimensionné de manière à pouvoir coulisser sur la partie de guidage conique (15) pour ainsi s'ouvrir et à s'encliqueter dans la gorge, **caractérisée en ce que**
l'élément d'encliquetage (18) est configuré comme une plaque annulaire ouverte en un emplacement, ayant une ligne périphérique intérieure et une ligne périphérique extérieure et présentant un creux (31) qui a pour effet une réduction de la largeur d'une partie de la plaque.

2. Ferrure de porte ou de fenêtre selon la revendication 1, **caractérisée en ce que** la partie de largeur réduite de la plaque est située sur l'extrémité de la plaque opposée à l'ouverture.

3. Ferrure de porte ou de fenêtre selon les revendications 1 ou 2, **caractérisée en ce que** le creux (31) s'étend le long de la ligne périphérique intérieure et **en ce que** d'autres parties de largeur réduite sont prévues, configurées et disposées de telle sorte que lorsque l'élément d'encliquetage glisse sur un corps qui se rétrécit coniquement, un nombre infini de points d'appui (33) est formé.

4. Ferrure de porte ou de fenêtre selon la partie de la revendication 3 qui se réfère à la revendication 2, **caractérisée en ce que** des emplacements libres (32) qui ont pour effet avec le creux (31) la formation d'exactement quatre points d'appui (33) sont prévus sur les bordures adjacentes à l'ouverture annulaire.

5. Ferrure de porte ou de fenêtre selon l'une des revendications 1 à 4, **caractérisée en ce que** la ligne périphérique extérieure de la plaque forme une courbe essentiellement circulaire de rayon constant.

6. Ferrure de porte ou de fenêtre selon l'une des revendications précédentes, **caractérisée en ce que** le système d'encliquetage présente en outre un élément de guidage qui guide l'élément d'encliquetage lors de son coulissement sur la partie conique de guidage.

7. Ferrure de porte ou de fenêtre selon la revendication 6, **caractérisée en ce que** l'élément de guidage est configuré comme capot (17).

8. Ferrure de porte ou de fenêtre selon la revendication 7, **caractérisée en ce que** le capot présente une bride débordant vers l'intérieur et qui guide l'élément d'encliquetage, ainsi qu'une ouverture (22) qui interrompt la bride et par laquelle une pince (23) à anneau de blocage peut être guidée.

9. Ferrure de porte ou de fenêtre selon la revendication 6, **caractérisée en ce que** l'élément de guidage est formé par une surface intérieure d'une rosette (40) et une plaque supplémentaire ouverte (42).

10. Ferrure de porte ou de fenêtre selon l'une des revendications précédentes, présentant une plaque de base (10) dotée d'une première surface (14) définissant un axe et configurée comme surface de guidage qui reprend des paliers réalisés différemment, par exemple un palier coulissant ou un palier à corps de roulement pour un col de l'élément d'actionnement, et qui s'étend depuis une extrémité inférieure, tournée vers la surface de la porte ou de la fenêtre, jusqu'à une extrémité supérieure, la plaque de base, l'élément d'actionnement et le système de ferrure étant configurés de telle sorte qu'à l'exception des vis éventuellement présentes, il ne présente aucun élément qui déborde au-delà de la surface de la porte ou de la fenêtre.

11. Ferrure de porte ou de fenêtre selon la revendication 10, **caractérisée en ce que** l'élément d'encliquetage repose directement ou indirectement sur une surface de butée de la plaque de base (10).

12. Ferrure de porte ou de fenêtre selon l'une des revendications précédentes, **caractérisée par** une plaque de base qui est destinée à être placée sur une surface de la porte ou de la fenêtre, qui présente une première surface (14) définissant un axe, configurée comme surface de guidage qui reprend des paliers réalisés différemment, par exemple comme paliers coulissants ou paliers à corps de roulement, pour un col de l'élément d'actionnement, et qui s'étend depuis une extrémité inférieure tournée vers la surface de la porte ou de la fenêtre jusqu'à une extrémité supérieure, et une deuxième surface (16) qui, par rapport à l'axe, se rétrécit depuis l'extérieur en direction de l'extrémité supérieure de la première surface (14).

13. Ferrure de porte ou de fenêtre selon la revendication 12, **caractérisée en ce que** la deuxième surface (16) s'étend par exemple essentiellement en cône et/ou **en ce que** certaines parties de la première surface (14) s'étendent en cylindre autour de l'axe.

14. Ferrure de porte ou de fenêtre selon les revendications 12 ou 13, **caractérisée en ce qu'**une surface de butée pour un élément d'encliquetage se raccorde à l'extrémité inférieure de la première surface (14).

15. Ferrure de porte ou de fenêtre selon la revendication 14, **caractérisée en ce que** la surface de butée est formée par un rabattement de l'extrémité inférieure de la première surface (14).

16. Ferrure de porte ou de fenêtre selon l'une des revendications 12 à 15, **caractérisée en ce qu'**elle est configurée de telle sorte que le palier puisse être repris de manière à ne pas déborder au-delà de la surface de la porte ou de la fenêtre.
